# EUROPÄISCHE PATENTSCHRIFT

(11) **EP 4 237 208 B1**
(45) Veröffentlichungstag und Bekanntmachung des Hinweises auf die Patenterteilung: **14.08.2024**
(21) Anmeldenummer: 22725405.9
(22) Anmeldetag: 25.04.2022
(51) Int. Cl.: B25J 9/00

(54) **VERFAHREN ZUR KONTAKTLOSEN NACHVERFOLGUNG EINER EXTREMITÄT BEI EINEM EXOSKELETT UND EXOSKELETT**
METHOD FOR CONTACTLESS MONITORING OF AN EXTREMITY IN AN EXOSKELETON, AND EXOSKELETON
PROCÉDÉ DE SURVEILLANCE SANS CONTACT D'UNE EXTRÉMITÉ D'UN EXOSQUELETTE, ET EXOSQUELETTE

(30) Priorität: 14.05.2021 DE 102021112561
(43) Veröffentlichungstag der Anmeldung: 06.09.2023
(73) Patentinhaber: German Bionic Systems GmbH, 86159 Augsburg (DE)
(72) Erfinder: BIEHLER, Maximilian, 86570 Inchenhofen (DE); KISS, Marius, 86165 Augsburg (DE)
(74) Vertreter: Charrier Rapp & Liebau
(86) Internationale Anmeldenummer: PCT/EP2022/060816
(87) Internationale Veröffentlichungsnummer: WO 2022/238095

(56) Entgegenhaltungen:
- EP-A1- 2 977 039
- DE-A1- 102017 129 021
- US-A1- 2007 123 997

## Beschreibung

Die Erfindung betrifft ein Exoskelett zur Unterstützung einer Geh- oder der Beugebewegung eines Trägers nach dem Oberbegriff des Anspruchs 1, sowie ein Verfahren gemäß dem Oberbegriff des Anspruchs 11 Exoskelette sind künstlich von außen an einen Körper eines Trägers angelegte mechanische Stützstrukturen zur Entlastung oder Unterstützung einer Körpermuskulatur des Trägers. Als aktive Exoskelette, d.h. Exoskelette mit aktiven, zumeist elektromotorischen Aktuatoren, finden sie beispielsweise Verwendung in der Unterstützung von Geh- oder Beugebewegungen und müssen hierzu Kräfte bzw. Momente zwischen Gliedmaßen und Rumpf des Trägers übertragen bzw. einleiten.

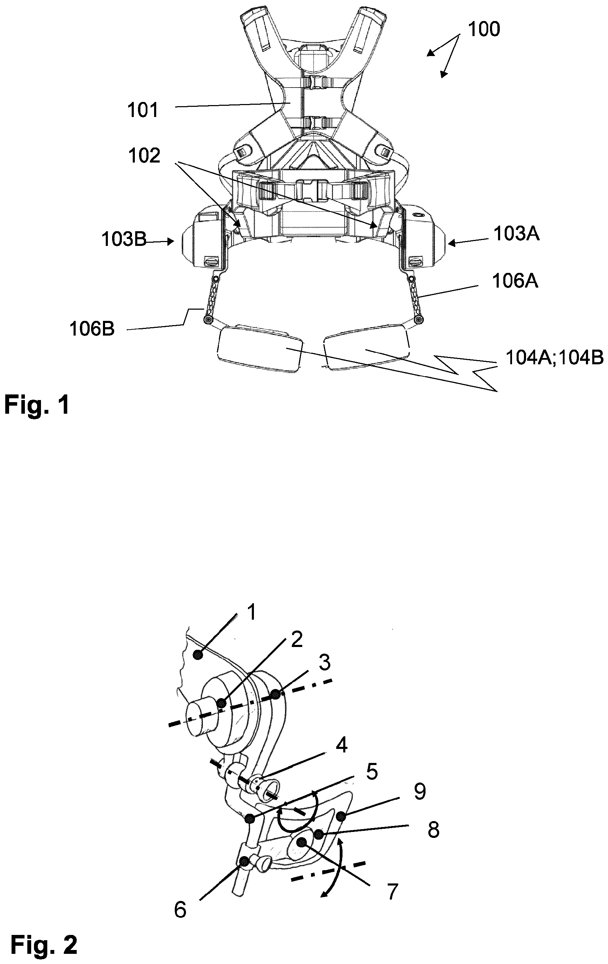

In Fig. 1 ist ein Exoskelett zur Geh- und Beugeunterstützung gezeigt. Das Exoskelett 100 umfasst eine hier als starre Rückenplatte mit einem Tragegeschirr ausgebildete Oberkörperanbindung 101, an welcher ein starrer Hüftbügel 102 befestigt ist. Die Oberkörperanbindung 101 kann ähnlich einem Rucksack mit dem Oberkörper eines Trägers verbunden werden. Lateral außen am Hüftbügel 102 sind jeweils ein linker bzw. rechter Aktuator 103A bzw. 103B mit je einer Ausgangswelle angeordnet, wobei die Ausgangswelle jeden Aktuators 103 mit jeweils einer Leit-Stützstruktur 106A bzw. 106B verbunden ist. An den Leit-Stützstrukturen 106A/B sind Oberschenkelanbindungen 104A bzw. 104B angebracht. Über die Aktuatoren 103 kann jeweils ein aufrichtendes Moment zwischen jeder Oberschenkelanbindung 104A/B und der Oberkörperanbindung 101 bzw. zwischen einem Oberschenkel und dem Oberkörper des Trägers erzeugt werden.

In Exoskeletten aus dem Stand der Technik werden Oberschenkelanbindungen über einen Oberschenkel umschließende Gurte fest mit einem linken bzw. rechten Oberschenkel des Trägers verbunden. Derartige Anbindungen für Extremitäten sind umständlich anzulegen und für den Träger unbequem, insoweit sie zu Scheuern auf der Haut neigen, eine freie Atmung der Haut behindern und zu Wundstellen führen können.

Um im Bedarfsfalle ein unterstützendes Moment in die Oberschenkel einleiten zu können, muss sichergestellt sein, dass Oberschenkelanbindungen zu jedem Zeitpunkt auf dem jeweiligen Oberschenkel berührend auf und anliegen. Dies ist bei einer Vorwärtsbewegung des Oberschenkels auf natürliche Weise gegeben (vorwärts in Bezug auf die in der Anatomie gewöhnlich verwendete Sagittalebene).

Bei einer Rückwärtsbewegung des Oberschenkels ist ein natürlicher Kontakt zwischen dem Oberschenkel und der Oberschenkelanbindung nicht gegeben. Zur Nachregelung bzw. Nachverfolgung muss ein rückwärtsgerichtetes Moment von außen auf die Oberschenkelanbindung bzw. den zugeordneten Aktuator einwirken.

Dies wird im Stand der Technik z.B. über elastische Zugriemen realisiert, welche posterior zwischen einem Hüftrahmen und Beingurten von Oberschenkelanbindungen verlaufen. Der Träger muss bei einer Vorwärtsbewegung des Oberschenkels also zusätzlich Kraft entgegen den Zugriemen aufwenden. An Zugriemen ferner unvorteilhaft ist auch, dass man mit Ihnen leicht hängen bleiben kann oder die Zugriemen von vorbeifahrenden Fahrzeugen wie z.B. Gabelstaplern versehentlich erfasst werden können. Zumindest in einigen Anwendungsbereichen können Exoskelette mit Zugriemen aus Sicherheitsaspekten daher nicht eingesetzt werden.

Aus dem Stand der Technik ist auch bekannt, die Anlage der Oberschenkelanbindungen am Oberschenkel drehmomentengesteuert zu gewährleisten: Dabei steuert eine Regelungseinheit des Exoskeletts einen Aktuator stets so, dass mindestens ein minimales Moment auf den Oberschenkeln anliegt. Auch in diesem Fall muss der Träger bei einer Vorwärtsbewegung des Oberschenkels stets entgegen diesem Moment arbeiten. Eine derartige Regelung der Aktuatoren ist nachteilig, einerseits da der Träger zum Bewegen eines Oberschenkels stets eine zusätzliche Kraft zur Überwindung des über den Aktuator eingebrachten Moments aufwenden muss, andererseits, da die Erzeugung eines Drehmomentes über den Aktuator energieintensiv ist und eine Einsatzdauer des Exoskeletts verkürzt.

Aus der US2007/123997 A1 ist ein Exoskelett mit einer Oberkörperanbindung, einem mit der Oberkörperanbindung fest verbundenen Hüftrahmen, einem ersten bzw. zweiten, jeweils an dem Hüftrahmen befestigten Aktuator zur Unterstützung einer Geh- oder Beugebewegung eines Trägers bekannt, welches eine erste und eine zweite, jeweils einem Aktuator zugeordnete Oberschenkelanbindung und eine erste und eine zweite Leit-Stützstruktur zur Übertragung der Kräfte zwischen einer Oberschenkelanbindung und dem dieser zugeordneten Aktuator sowie einer Regelungseinheit zur Ansteuerung der Aktuatoren aufweist.

Aufgabe der Erfindung ist es, eine Exoskelett anzugeben, welches den Tragekomfort hinsichtlich der Anbindungen verbessert.

Die Aufgabe wird gelöst durch ein Exoskelett nach Anspruch 1 sowie ein Verfahren nach Anspruch 11.

Dem erfindungsgemäßen Verfahren liegt die Idee zugrunde, eine drehmomentengesteuerte Regelung des Exoskeletts durch eine abstandsbasierte Regelung zumindest im Falle eines Leerlaufs (nachfolgend als erster Betriebsmodus bezeichnet) des Exoskeletts zu ersetzen, bei der eine Anbindung, bspw. eine Oberschenkelanbindung, das der Anbindung zugeordnete Körperglied, bspw. einen Oberschenkel, nicht berührt. Unter Leerlauf ist ein Zustand zu verstehen, bei welcher der Träger des Exoskeletts keine aktive Unterstützung durch das Exoskelett wünscht und daher keine aktiven Kräfte auf den Träger übertragen werden sollen. Ein solcher Zustand ist z.B. das Gehen.

Das erfindungsgemäße Verfahren sieht vor, zur Ansteuerung eines Aktuators einer Leit-Stützstruktur eines Exoskeletts den Aktuator über eine Regelungseinheit gezielt anzusteuern. Dabei weist die Leit-Stützstruktur eine Anbindung zur Unterstützung einer der Anbindung zugeordneten Extremität eines Trägers auf, beispielsweise einem Fingerglied, einem Beinglied und/oder einem Armglied. Die Anbindung ist zur unmittelbaren Anlage an die Extremität, bspw. halbschalenförmig, ausgebildet und steht über die Leit-Stützstruktur in unmittelbarem Kraftfluss mit dem Aktuator. In der Anbindung ist dabei ein Abstandssensor zur Messung des Abstandes zwischen der Anbindung und der ihr zugeordneten Extremität angeordnet, wobei die Regelungseinheit den Aktuator in einem ersten Betriebsmodus so ansteuert, dass die Anbindung von der Extremität in einem vordefinierten Abstand gehalten wird. Der vordefinierte Abstand kann z.B. 2mm, 4mm oder auch 6mm betragen, wenn als Abstand die kürzeste Entfernung zwischen dem Abstandssensor und der Extremität angenommen wird. In anderen Worten berührt die Anbindung die Extremität in diesem ersten Betriebsmodus nicht. Der Träger kann die Extremität frei z.B. vorwärts oder rückwärts bewegen, wobei die Regelungseinheit die Anbindung auch bei einer Vorwärts- oder Rückwärtsbewegung auf den vordefinierten Abstand regelt. Die Anbindung wird also der (sich bewegenden) Extremität berührungslos und in Echtzeit unter Einhaltung des vordefinierten Abstandes nachgeführt.

In dem zuvor auch als Leerlauf bezeichneten ersten Betriebsmodus werden also keine aktiven Kräfte über das Exoskelett auf die Extremität aufgebracht. Für den Träger ist dies vorteilhaft, da er keine Gegenmomente des Exoskeletts überwinden muss. Weiterhin kann die Anbindung auf Abstand gehalten werden, so dass ein Hautkontakt und damit ein Schwitzen des Trägers vermieden oder zumindest verringert wird. Im Gegensatz zu den oben dargestellten Lösungsansätzen sind weder Zugriemen noch Umgürtungen des Oberschenkels notwendig. Dies vereinfacht den mechanischen Aufbau der Anbindung. Auch erleichtert dies das An- und Ablegen des Exoskeletts.

Die Regelungseinheit steuert den Aktuator außerdem in einem zweiten Betriebsmodus so an, dass die Anbindung an der Extremität kraftleitend, also berührend, anliegt. In diesem zweiten Betriebsmodus, nachfolgend auch als "Unterstützungsmodus" adressiert, können und sollen eine Unterstützungskraft von dem Exoskelett in die Extremität zur Unterstützung bzw. Entlastung bestimmter Muskelpartien des Trägers eingeleitet werden.

Der Wechsel zwischen erstem und zweitem Betriebsmodus erfolgt dabei in Abhängigkeit mindestens einer Variablen aus der nachfolgenden Gruppe:
- einem Aufrichtungswinkel des Oberkörpers oder einer Oberkörperanbindung des Trägers,
- einer Änderungsrate des Aufrichtungswinkels,
- einem Anstellwinkel der oder einer Extremität bzw. der dieser zugeordneten Leit-Stützstruktur,
- einer Änderungsrate eines Anstellwinkels der oder einer Extremität bzw. der dieser zugeordneten Leit-Stützstruktur,
- einem Vergleich des Anstellwinkels der Extremität bzw. der dieser zugeordneten Leit-Stützstruktur mit einem zweiten Anstellwinkel einer zweiten Extremität des Trägers bzw. einer dieser zugeordneten Leit-Stützstruktur,
- einem anliegenden Drehmoment in bzw. an dem Aktuator.

Unter dem Aufrichtungswinkel ist dabei der Winkel des Oberkörpers des Trägers gegenüber der Vertikalen gemeint. Ersatzweise ist damit der technisch äquivalente Aufrichtungswinkel der Oberkörperanbindung des Exoskeletts gemeint. Der Aufrichtungswinkel bei einer aufrecht stehenden Person beträgt also 0°. Unter dem Anstellwinkel einer Extremität im anatomischen Sinne ist der Winkel zwischen einer Hauptachse der Extremität und dem Oberkörper zu verstehen. Im Sinne dieser Erfindung ist unter Anstellwinkel der technisch äquivalente Winkel zu verstehen, der sich zwischen der der Extremität zugeordneten Leitstützstruktur und einer Hauptachse eines Anbindungsteils, mit welchem die Leitstützstruktur verbunden ist, abzüglich von 180° ergibt. Der Anstellungswinkel meint also den relativen Winkel der Leitstützstruktur gegenüber einer Ausgangsstellung, in welchem die Leitstützstruktur in einem Winkel von 180° gegenüber der Oberkörperanbindung angeordnet ist.

Unter Winkel sind dabei vorzugsweise die Winkel in der Sagittalebene zu verstehen. Andere Winkelrichtungen sind möglich.

Durch das Verfahren kann bedarfsgerecht zwischen dem ersten und dem zweiten Betriebsmodus umgeschaltet werden, wobei dem Träger im zweiten Betriebsmodus die volle Unterstützung durch das Exoskelett zur Verfügung stehen.

Gegenstand der Erfindung ist auch ein Exoskelett:
Das Exoskelett umfasst eine Oberkörperanbindung, einen mit der Oberkörperanbindung fest verbundenen Hüftrahmen und einen ersten bzw. zweiten jeweils und vorzugsweise lateral an dem Hüftrahmen befestigten ersten bzw. zweiten Aktuator zur Unterstützung einer Geh- oder Beugebewegung eines Trägers. Die Oberkörperanbindung kann beispielsweise als Tragegeschirr mit einer starren Rückenplatte ausgebildet sein.

Ferner sind dem ersten und dem zweiten Aktuator jeweils eine erste bzw. zweite Oberschenkelanbindung zugeordnet, wobei die Zuordnung über eine erste bzw. eine zweite Leit-Stützstruktur, die sich zwischen der Oberschenkelanbindung und dem Aktuator respektive einer Ausgangswelle oder einem Ausgangsflansch des Aktuators erstreckt. Über die erste bzw. zweite Leit-Stützstruktur können Kräfte zwischen jeweils einer Oberschenkelanbindung und dem dieser Oberschenkelanbindung zugeordnetem Aktuator übertragen werden. Die Oberschenkelanbindung ist vorzugsweise als starre Halbschale, die eine vordere Partie des Oberschenkels überdeckt, ausgebildet.

Das Exoskelett umfasst außerdem zumindest eine Regelungseinheit (auch: Regler) zur Ansteuerung der Aktuatoren. In jeder (ersten bzw. zweiten) Oberschenkelanbindung ist ein (erster bzw. zweiter) Abstandssensor zur kontaktlosen Nachverfolgung der Position eines (ersten bzw. zweiten) Oberschenkels des Trägers relativ zu der (ersten bzw. zweiten) Oberschenkelanbindung angeordnet. Der Abstandssensor misst dabei in Echtzeit den Abstand zwischen der Oberschenkelanbindung und dem Oberschenkel, so dass die Regelungseinheit die Oberschenkelanbindung relativ zu dem Oberschenkel auch bei einem sich bewegenden Oberschenkel in einem vordefinierten Abstand halten kann.

Durch ein entsprechendes Exoskelett kann der Tragekomfort für den Träger erhöht und insbesondere das vorbeschriebene Verfahren umgesetzt werden.

In vorteilhafterweise ist einer oder jeder Abstandssensor ein kapazitiver, ein optischer Abstandssensor oder ein Ultraschallsensor (Ultraschall-Abstandssensor). Kapazitive Sensoren messen elektrische Ladungsveränderungen eines Ladungsträgers infolge von in deren Nähe gebrachten Objekten, hier z.B. einem Oberschenkel. Kapazitive Sensoren sind günstig, aufgrund schwankender elektrischer Eigenschaften am Oberschenkel jedoch aufwendig und regelmäßig zu (re)kalibrieren. Optische und Ultraschallsensoren lassen sehr hohe Auflösungsgenauigkeiten und damit eine genaue Abstandsmessung mit geringeren Schwankungsbreiten zu.

Zweckmäßig ist jeder der Abstandssensoren jeweils in einer Tasche der Oberschenkelanbindung angeordnet. Unter Tasche ist dabei eine rückwärtige Ausnehmung an einer dem Oberschenkel zugewandten Seite der Oberschenkelanbindung zu verstehen, in welcher der Abstandssensor ,versenkt' werden kann. Hierdurch steht der Abstandssensor nicht aus der Oberschenkelanbindung hervor. Insbesondere bei Verwendung einer weichen Oberschenkelauflage oder einem kompressiblen Oberschenkelpolster, das mit der Oberschenkelanbindung verbunden ist, kann der Abstand zwischen der Oberschenkelanbindung und dem Abstandssensor so eingestellt werden, dass die Oberschenkelauflage oder das Oberschenkelpolster an dem Oberschenkel in einem nicht komprimierten Zustand anliegt. Hierdurch kann dem Träger in einem Leerlauf das Gefühl einer permanenten Verfügbarkeit des Exoskeletts vermittelt werden, ohne dass der Nutzer dabei Gegenkräfte überwinden muss, da die Regelungseinheit den Abstand zwischen der Oberschenkelanbindung und dem Oberschenkel auch bei sich bewegendem Oberschenkel konstant auf dem vordefinierten Abstand hält.

Die Regelungseinheit des Exoskeletts zur Ansteuerung der Aktuatoren ist vorteilhaft zur Durchführung einer kontaktlosen Nachverfolgung der Oberschenkel in einem ersten Betriebsmodus (Leerlauf-Modus) ohne Unterstützung einer Gehbewegung des Trägers eingerichtet: Dabei steuert die Regelungseinheit die Aktuatoren derart an, dass jede Oberschenkelanbindung sich jeweils in einem vordefinierten Abstand ungleich 0 zu dem ihr zugeordneten Oberschenkel befindet. Hierdurch befindet sich stets ein Spalt zwischen dem Oberschenkel und der Oberschenkelanbindung, in welchem bspw. Luft zirkulieren kann. Dem Träger kann hierdurch das Gefühl einer schwebenden Oberschenkelanbindung vermittelt werden.

Bei der Regelungseinheit kann es sich z.B. um einen Microcontroller mit einer CPU, einer Datenschnittstelle zur Ein- und Ausgabe von Datensignalen und einem Speicher sowie auf dem Speicher abgespeicherten Handlungsanweisungen zur Verarbeitung von eingehenden Datensignalen handeln.

Die Regelungseinheit ist zweckmäßig zur Ansteuerung der Aktuatoren in einem zweiten Betriebsmodus (Unterstützungsmodus) zur Unterstützung einer Beugebewegung eingerichtet und zwar derart, dass in dem zweiten Betriebsmodus jede Oberschenkelanbindung zur Krafteinleitung jeweils berührend auf dem ihr zugeordneten Oberschenkel aufliegt. In diesem Zustand kann der Träger insb. in der unteren Rückenmuskulatur entlastet und beim Aufrichten unterstützt werden.

Ein Wechsel zwischen dem ersten und dem zweiten Betriebsmodus und umgekehrt kann bei bestimmten dauerhaft oder variabel festgelegten Randbedingungen erfolgen, insb. bei Vorliegen bestimmter insb. durch Sensoren des Exoskeletts ermittelter Variablen. Dabei können für einen Wechsel vom ersten in den zweiten Betriebsmodus andere Randbedingungen gewählt werden als für den Wechsel von dem zweiten Betriebsmodus zurück. Ein bestimmter Betriebsmodus der Regelungseinheit kann am Exoskelett, etwa über einen berührungssensitiven Bildschirm, auch dauerhaft eingestellt werden, d.h. dass ein Wechsel zwischen den Betriebsmodi dann nicht bzw. nur auf Wunsch des Trägers erfolgt.

Vorteilhaft kann als eine Variable zum Wechsel des Betriebsmodus ein Ausrichtungswinkel der Oberkörperanbindung gegenüber der Vertikalen in der Sagittalebene verwendet werden. Das Exoskelett weist hierzu an der Oberkörperanbindung eine Inertialeinheit zur Erfassung des sagittalen Aufrichtungswinkels auf. Die Inertialeinheit kann z.B. an der Oberkörperanbindung, insb. einer starren Rückenplatte derselben, befestigt sein. Die Regelungseinheit des Exoskeletts ist eingerichtet, solange in dem ersten Betriebsmodus zu bleiben und/oder vom zweiten in den ersten Betriebsmodus zu wechseln, solange bzw. wenn der Ausrichtungswinkel der Oberkörperanbindung sich innerhalb eines vorbestimmten Winkelbereichs bewegt bzw. in den vorbestimmten Winkelbereich eintritt. Der Winkelbereich kann sich zweckmäßig bei ±20° gegenüber der Vertikalen bewegen. Ein solcher Winkelbereich entspricht in etwa dem Winkel des Oberkörpers bei einem stehenden oder gehenden Menschen. Der Winkelbereich könnte jedoch auch größer, z.B. bei ±30° oder asymmetrisch, z.B. zwischen -10° und +20° gewählt werden. Durch einen je nach Anwendungsfall zweckmäßig gewählten Winkelbereich kann der erste Betriebsmodus automatisch von der Regelungseinheit des Exoskeletts eingestellt werden. Eine händische Umstellung zwischen den Betriebsmodi durch den Träger wird hierdurch entbehrlich.

Gleichermaßen kann es vorteilhaft sein, wenn die Regelungseinheit eingerichtet ist, in dem zweiten Betriebsmodus zu bleiben und/oder vom ersten in den zweiten Betriebsmodus (Unterstützungsmodus) zu wechseln, solange bzw. wenn der Ausrichtungswinkel der Oberkörperanbindung sich außerhalb des vordefinierten Winkelbereichs bewegt. Hierdurch kann der Träger insb. in gebückter Haltung aktiv durch das Exoskelett unterstützt werden.

Als alternative oder zusätzliche Kriterien zum Wechsel zwischen den Betriebsmodi kann das Exoskelett zwei Winkelsensoren zur Erfassung eines (ersten bzw. zweiten) Anstellwinkels zwischen der Oberkörperanbindung und jeder (ersten bzw. zweiten) Leit-Stützstruktur umfassen. Der Anstellwinkel kann dabei als derjenige Winkel in der Sagittalebene definiert werden, der sich zwischen der Oberkörperanbindung und der Leit-Stützstruktur (bzw. deren Längsachse) ergibt. Dabei ist zu unterstellen, dass die Leit-Stützstruktur eine eindeutige Längsachse aufweist, die näherungsweise mit der Längsachse des Oberschenkels übereinstimmt. Ein Anstellwinkel entspricht damit näherungsweise dem Beugewinkel zwischen Hüfte und Oberschenkel(knochen).

Die Regelungseinheit ist in einer zweckmäßigen Ausführungsform derart eingerichtet, dass sie vom ersten in den zweiten Betriebsmodus wechselt, wenn beide Anstellwinkel der Leit-Stützstrukturen im Wesentlichen synchron in einen vordefinierten Winkelbereich eintreten. Praktisch bedeutet dies, dass die Regelungseinheit dann den Betriebsmodus wechselt, wenn der Träger z.B. in die Hocke geht oder seinen Oberkörper abknickt, um bspw. eine Last anzuheben. Die Winkelstellung der Oberschenkel und damit der Leit-Stützstrukturen ist bei derartigen Körperübungen im Regelfall übereinstimmend. Durch eine Berücksichtigung der Anstellwinkel ist eine alternative Möglichkeit zum Umschalten der Betriebsmodi gegeben.

Unter Anstellwinkel ist die relative Winkelabweichung zwischen Leitstützstruktur und der Oberkörperanbindung zu verstehen, die von derjenigen Winkelstellung abweicht, in welcher die Leitstützstruktur in gerader Verlängerung der Oberkörperanbindung ausgerichtet ist.

Ein Wechsel zwischen den Betriebsmodi kann jedoch auch durch die Berücksichtigung mehrerer Kriterien, insb. der Kombination von den Anstellwinkeln und dem Aufrichtungswinkel, abhängig gemacht werden. Wenn die Anstellwinkel zusätzlich zu dem Ausrichtungswinkel des Oberkörpers berücksichtigt werden, kann z.B. eine Plausibilitätskontrolle (Redundanz) erfolgen und die Fehlerrate einer ungewollten Umstellung der Betriebsmodi verringert werden.

Der vordefinierte Winkelbereich der Anstellwinkel kann dabei z.B. vorteilhaft betragsmäßig kleiner als 45° gegenüber einer Ausgangsstellung bzw. einem Ausgangswinkel von 180° gegenüber der Oberkörperanbindung festgelegt werden. Die Ausgangsstellung bzw. der Ausgangswinkel ist ein Winkel zwischen der Oberkörperanbindung und der Leitstützstruktur von 180°, d.h. in welchem die Leitstützstruktur in geradliniger Verlängerung der Oberkörperanbindung ausgerichtet ist.

Ein Anstellungswinkel von -45° (betragsmäßig 45°) entspricht bei einem aufrecht stehenden Menschen (Aufrichtungswinkel von 0°) einem absoluten Anstellwinkel des Oberschenkels gegenüber der Vertikalen von 135°. Dies kann ein geeignetes Kriterium darstellen, um eine beginnende Hebebewegung eines Trägers festzustellen. Der Winkelbereich kann je nach Anwendungsfall auch größer oder kleiner oder individuell, d.h. nutzerspezifisch, gewählt oder angepasst sein.

Zugleich kann die Regelungseinheit vorteilhaft eingerichtet sein, vom zweiten in den ersten Betriebsmodus zu wechseln, wenn beide Anstellwinkel der Leit-Stütz-Strukturen im Wesentlichen synchron aus dem vordefinierten Winkelbereich austreten, insb. einem Winkelbereich von betragsmäßig mehr als 20° (i.e. einem absoluten Winkel von 160° im Falle eines Aufrichtungswinkels von 0°). Dies kann ein geeignetes Kriterium darstellen, um eine abgeschlossene Hebebewegung eines Trägers festzustellen.

Ferner weist die Inertialeinheit des Exoskeletts in einer weiteren und vorteilhaften Ausführung einen Beschleunigungssensor zur Erfassung der Beschleunigungswerte der Oberkörperanbindung auf. Das Exoskelett kann zusätzlich oder alternativ auch einen (ersten bzw. zweiten) Drehmoment-Sensor zur Erfassung des an dem (ersten bzw. zweiten) Aktuator jeweils anliegenden Drehmoments und/oder einen (ersten bzw. zweiten) Winkelgeschwindigkeits-Sensor zur Erfassung der Winkelgeschwindigkeit des (ersten bzw. zweiten) Aktuators umfassen. Über diese Sensoren können Randbedingungen zur Umstellung der Betriebsmodi vorteilhaft weiter plausibilisiert werden.

In einer besonders vorteilhaften Ausführungsform ist die Regelungseinheit eingerichtet, genau dann von dem ersten in den zweiten Betriebsmodus zu wechseln, wenn einer der Drehmomentsensoren des ersten bzw. zweiten Aktuators ein Drehmoment ungleich 0 misst. Hierdurch kann unabhängig von einer Winkelmessung des Anstell- und/oder Aufrichtungswinkels ein sofortiger Wechsel der Betriebsmodi eingeleitet werden. Dieser Fall kann bspw. bei schnellen Bewegungen, insb. einem Sturz des Trägers, auftreten.

Vorteilhafte Weiterentwicklungen und weitere Merkmale der Erfindung ergeben sich aus den Unteransprüchen und der nachfolgenden Beschreibung.

Dabei zeigen:
- **Fig. 1**: ein erfindungsgemäßes Exoskelett in einer Frontalansicht,
- **Fig. 2**: eine Leitstützstruktur zwischen einer Oberschenkelanbindung und einem Aktuator,
- **Fig. 3**: eine Leitstützstruktur zwischen einer Oberschenkelanbindung und einem Ausgangsflansch eines Aktuators mit einem in der Oberschenkelanbindung angeordneten Abstandssensor,
- Fig. 4: eine schematische Darstellung eines Exoskeletts in neutraler Stellung,
- Fig. 5: eine schematische Darstellung eines Exoskeletts in einem ersten Betriebsmodus mit asynchroner Bewegung von Leitstützstrukturen,
- Fig. 6: eine schematische Darstellung eines Exoskeletts kurz vor einem Wechsel von einem ersten in einen zweiten Betriebsmodus mit synchroner Bewegung von Leitstützstrukturen,
- Fig. 7: eine schematische Darstellung eines Exoskeletts kurz vor einem Wechsel von einem zweiten in einen ersten Betriebsmodus mit synchroner Bewegung von Leitstützstrukturen,
- Fig. 8: eine schematische Darstellung eines Regelungskreises,
- Fig. 9: eine schematische Darstellung einer Regelung eines Exoskeletts in einem ersten Betriebsmodus, sowie
- Fig. 10: eine schematische Darstellung einer Regelung eines Exoskeletts in einem zweiten Betriebsmodus.

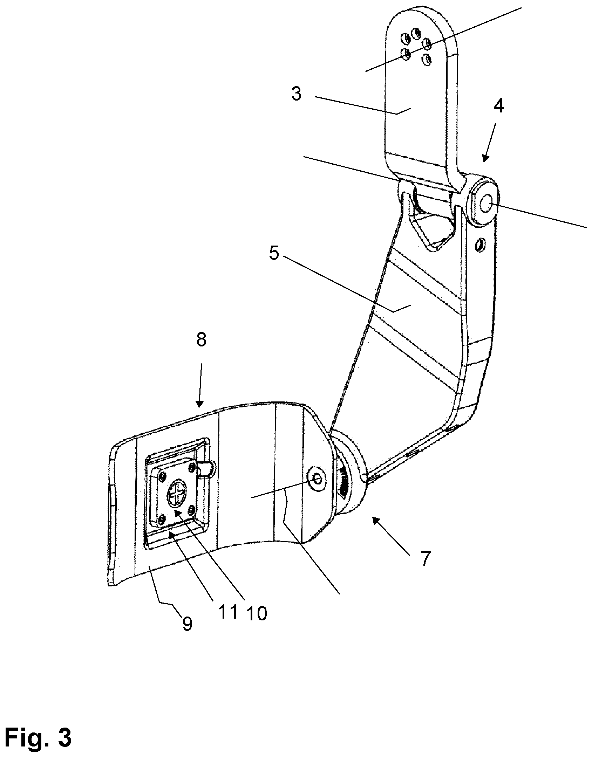

Fig. 1 zeigt das bereits in der Beschreibungseinleitung anskizzierte Beispiel des Exoskeletts 100, wobei die Oberschenkelanbindungen 104A/B jedoch nicht über Gurtzeug mit Oberschenkeln eines Trägers fest verbunden sind, sondern nur an der Vorderseite der Oberschenkel formschlüssig aufliegen können. Die Oberschenkelanbindungen 104A/B sind als Halbschale ausgebildet. Eine weitergehende Verbindung zwischen Oberschenkeln und den Oberschenkelanbindungen 104A/B ist nicht gegeben, so dass der Tragekomfort aufgrund der geringen Kontaktflächen zwischen Oberschenkel und Oberschenkelanbindungen 104A/B hoch ist, und die Oberschenkelanbindungen 104A/B darüber hinaus einfach und unaufwendig mit den Oberschenkeln verbunden werden können, vgl. die nachfolgende Erläuterung zur Figuren 2. In den Oberschenkelanbindungen 104A/B sind dabei Abstandssensoren analog den Beispielen aus Fig. 2 und 3 verbaut. Mittels der Abstandssensoren kann eine Umschaltung zwischen zwei Betriebsmodi, nämlich mit kontaktloser Nachverfolgung der Oberschenkel durch die Beinanbindungen und ohne Momentenunterstützung (erster Betriebsmodus) sowie unter Anlage der Beinanbindungen an den Oberschenkeln und mit Momentenunterstützung (zweiter Betriebsmodus) realisiert werden. Die Regelung des Exoskeletts bzw. dessen Aktuatoren kann hierbei über eine Regelungseinheit des Exoskeletts erfolgen.

In Fig. 2 ist dabei ein lateraler Abschnitt eines (vergleichbar zum Hüftrahmen 102 der Fig. 1 ausgebildeten) Hüftrahmens 1 gezeigt, an dessen Ende sich ein hier als Elektromotor ausgeführter Aktuator 2 befindet. Über eine hier nicht dargestellte Regelungseinheit kann ein Ausgangsflansch 3 des Aktuators 2 aktiv um eine gestrichelt dargestellte erste Drehachse aktiv in der Horizontalen gedreht werden. An dem Ausgangsflansch 3 ist eine als Beinglied 5 bezeichnete Leit-Stützstruktur angebracht, die um eine ebenfalls gestrichelt und senkrecht zu der vorgenannten ersten Drehachse ausgerichtete zweite Drehachse drehbar ist. Die zweite Drehachse ist in der Sagittalebene angeordnet. An dem Beinglied 5 ist über eine Höhenverstellung 6 eine Oberschenkelplatte 8 zur Anlage an den Oberschenkel des Trägers angeordnet. Die hier als Oberschenkelplatte 8 bezeichnete Oberschenkelanbindung weist ein Kippgelenk 7 mit einem definierten Spiel zur besseren Anpassung an die Ausrichtung des Oberschenkels auf. An der Oberschenkelplatte 8 ist eine weiche und kompressible Oberschenkelauflage 9 angebracht. Ferner ist in der Oberschenkelplatte 8 ein Abstandssensor analog der nachfolgend in Bezug auf Fig. 3 beschriebenen Oberschenkelanbindung angeordnet. Der Abstandssensor ist dabei über hier nicht dargestellte Signalleitungen mit einer Regelungseinheit des Exoskeletts verbunden und übermittelt in Echtzeit einen gemessenen Abstand zwischen dem Abstandssensor und dem Oberschenkel.

Zum Anlegen eines die Oberschenkelanbindung 8 umfassenden Exoskeletts braucht der Träger lediglich eine mit einem Tragegeschirr ausgestattete Oberkörperanbindung anzulegen und die Oberschenkelanbindung 8 über das passiv verdrehbare zweite Drehgelenk 4 vor seinem Oberschenkel zu positionieren ("umzuklappen"). Eine zusätzliche Befestigung über den Oberschenkel umfassendes Gurtzeug ist nicht notwendig.

Die in Fig. 3 dargestellte Anbindungsmöglichkeiten für einen rechten Oberschenkel ist im Wesentlichen gleichlaufend mit der Oberschenkelanbindung aus Fig. 2, wobei im Gegensatz zu der Oberschenkelanbindung 8 aus Fig. 2 auf eine Höhenverstellung (Bezugszeichen 6 in Fig. 2) zur Anpassung an die anatomischen Gegebenheiten des Trägers verzichtet wurde. Auch hier ist die Oberschenkelanbindung als Halbschale zur formschlüssigen Anlage an eine vordere Partie des Oberschenkels ausgebildet. Die dargestellte Anbindungsmöglichkeit weist ebenfalls einen mit einem nicht dargestellten Aktuator verbundenen Ausgangsflansch 3 auf, der an einem oberen Ende in der Horizontalen quer zur Sagittalebene aktiv durch den Aktuator verdrehbar ist und wobei an ein unteres Ende des Ausgangsflansches über ein passives Drehgelenk 4 ein Gerüstarm 5 angebunden ist. Am unteren Ende des Gerüstarms 5 ist über ein Kippgelenk 7 eine plattenförmige Oberschenkelanbindung 8 angebracht, die eine Tasche 11 aufweist, in der ein Abstandssensor 10 angeordnet ist. Die Tasche 11 ist dabei so tief ausgeformt, dass der Abstandssensor 10 nicht in unmittelbare Anlage mit dem Oberschenkel des Trägers in Berührung kommen kann.

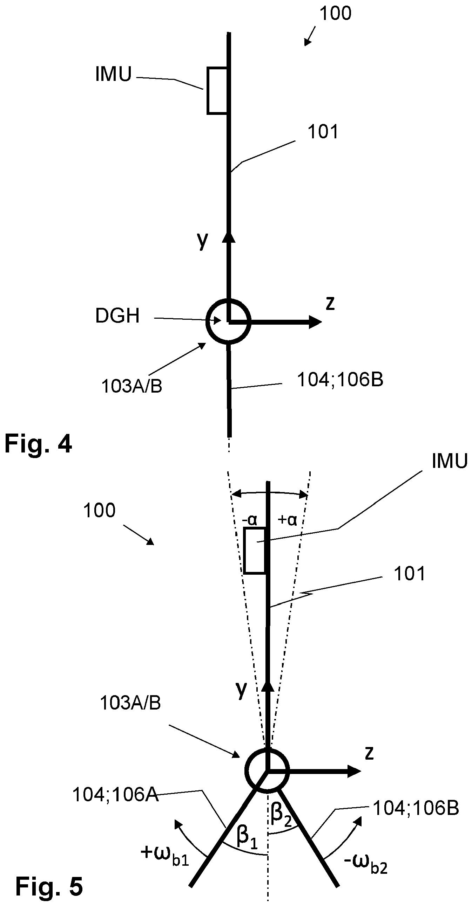

Die in Fig. 2 und Fig. 3 dargestellten Anbindungsmöglichkeiten können im Sinne eines im nachfolgend schematisch wiedergegebenen Exoskeletts 100 eingesetzt werden, vgl. Fig. 4 bis Fig. 7.

In den Figuren 4 bis 7 sind die Richtungsangaben mit kartesischen Koordinaten angegeben, wobei Y die Hochachse (Vertikale), Z die nach vorne gerichtete Horizontalachse und X die in die Blattebene der Figuren hineinzeigende Horizontalachse darstellt. Richtungsangaben beziehen sich wie zuvor auch stets auf die in der Anatomie gebräuchlichen Richtungsangaben (Frontalebene, Sagittalebene, Transversalebene und den dazugehörigen Richtungen).

In den Fig. 4 bis Fig. 7 ist ein Exoskelett 100 in einer Seitenansicht (Sagittalebene) in unterschiedlichen Positionen schematisch dargestellt. Das Exoskelett 100 weist eine zum Beispiel analog dem Beispiel der Fig. 1 ausgeführte Oberkörperanbindung 101 mit einem Tragegeschirr und einem Hüftbügel auf, wobei am Hüftbügel lateral jeweils ein Aktuator 103A/B zur Unterstützung des linken bzw. rechten Oberschenkels angeordnet ist. Am Ausgang der Aktuatoren 103A/B ist eine analog den Fig. 2 oder Fig. 3 gezeigte Leit-Stützstruktur 106A/B mit einer Oberschenkelanbindung 104A/B (A für links und B für rechts), angeordnet. Die Leit-Stützstruktur 106A/B ist über den ihr zugeordneten Aktuator um die mit DGH (Drehgelenk Hüfte) bezeichnete Achse aktiv drehbar. Die Achse stimmt weitestgehend mit der Drehachse eines Hüftgelenks des Trägers überein.

An der Oberkörperanbindung 101 ist an geeigneter Stelle weiterhin eine Inertialeinheit die IMU angebracht. Die Inertialeinheit IMU ist mit Sensorik zur Erfassung eines Aufrichtungswinkels α und mit einer Sensorik zur Erfassung der Änderungsrate des Aufrichtungswinkels α ausgestattet. Konkret kann dies beispielsweise eine Gyroskopeinheit sein. Der Aufrichtungswinkel α bezeichnet dabei die (absolute) Ausrichtung bzw. den Winkel α gegenüber der Vertikalen, vgl. Fig. 5.

Ferner ist in den Aktuatoren 103A/B geeignete Sensorik zur Erfassung der in den Aktuatoren 103A/B anliegenden Drehmomente, sowie der absoluten Winkel-Position der Aktuatoren 103A/B und der Änderungsrate der Drehmomente und Winkeländerungsraten der absoluten Winkelpositionen vorgesehen. Die absolute Winkel-Position der Aktuatoren entspricht dabei jeweils einem Anstellwinkel β (β₁ bzw. β₂) der Leit-Stützstrukturen 106A/B gegenüber der Oberkörperanbindung.

Die Anstellwinkel β sollen dabei als relative Abweichung der Leit-Stützstrukturen 106A/B aus einer Normalstellung verstanden werden; die Normalstellung ist diejenige, bei welcher die Oberkörperanbindung 101 mit einer Leit-Stützstruktur 106A/B einen Winkel von 180° einschließt - in anderen Worten also, dass die Leit-Stützstrukturen 106A/B in gerader Verlängerung der Oberkörperanbindung 101 ausgerichtet sind, wie es in Fig. 4 dargestellt ist.

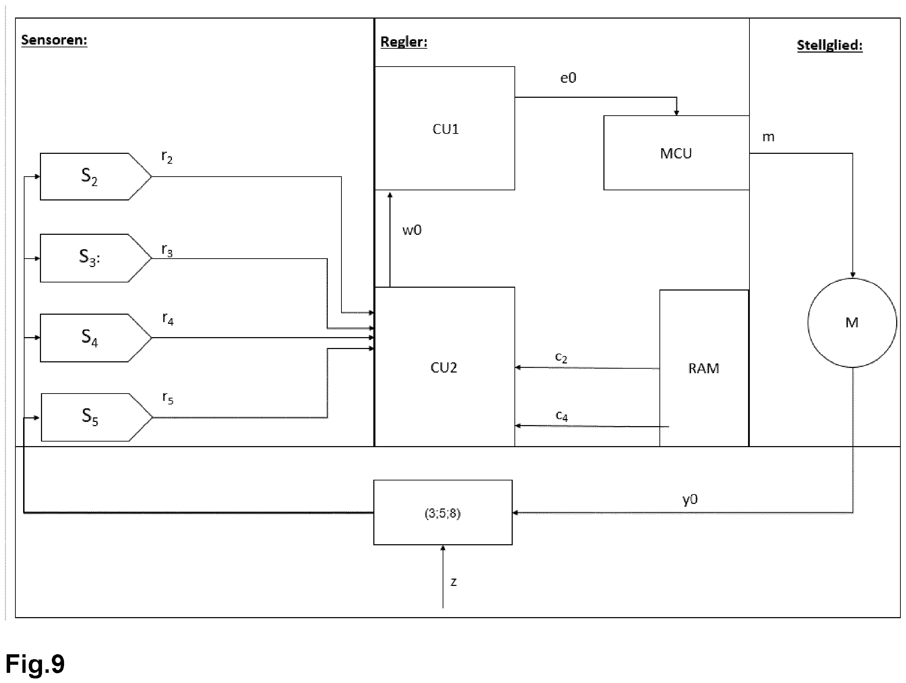

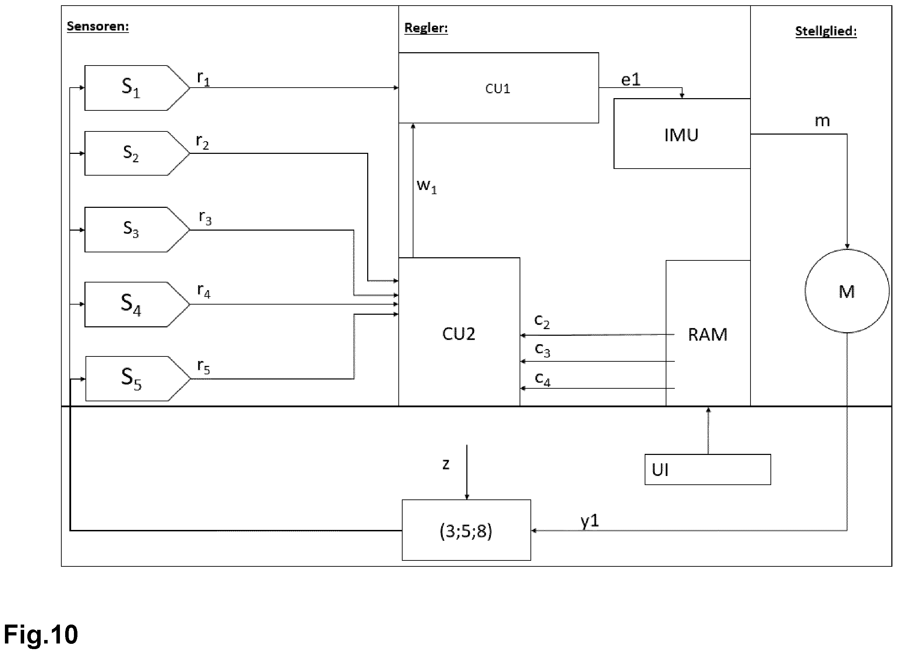

Das Exoskelett 100 der Fig. 4 bis 7 umfasst auch eine im Zusammenhang mit den Fig. 9 und 10 nachfolgend noch näher beschriebenen Regelungseinheit zur Steuerung und Regelung des Exoskeletts 100, insb. dessen Aktuatoren 103A/B. In den Oberschenkelanbindungen 104A/B ist auch jeweils ein Abstandssensor, wie in den Beispielen der Fig. 2 und Fig. 3 gezeigt, eingebracht, welche den aktuellen Abstand zwischen dem Abstandssensor und dem ihm zugeordneten Oberschenkel in Echtzeit an die Regelungseinheit übermitteln.

In Fig. 4 ist eine Normal-Position des Exoskeletts 100 wiedergeben, die der Haltung eines aufrecht stehenden Menschen entspricht, also mit einem Aufrichtungswinkel α der Oberkörperanbindung 101 von 0° und zwei Anstellungswinkeln βi bzw. β₂ der Leit-Stützstrukturen 106A/B von jeweils 0°.

In Fig. 5 ist das Exoskelett 100 in einem ersten Betriebsmodus (Leerlauf) dargestellt, in welchem ein Träger des Exoskeletts 100 beispielsweise normal geht. Seine Oberschenkel und die damit verbundenen Leit-Stützstrukturen 106A/B werden also in alternierender Weise stets gegenläufig schwingen, so dass die Anstellwinkel β (fast) immer ungleich sind und die Änderungsraten ω der Anstellwinkel β immer unterschiedlich, nämlich gegenläufig, sind. Der Aufrichtungswinkel α schwankt beim normalen Gehen in etwa in dem hier dargestellten Bereich von +-20° gegenüber der Vertikalen.

Im ersten Betriebsmodus steuert die Regelungseinheit die Aktuatoren 103A/B derart an, dass stets ein vordefinierter Abstand zwischen jeder der Oberschenkelanbindungen 104A/B und den diesen zugeordneten Oberschenkeln des Trägers gewahrt wird. Die Oberschenkelanbindungen 104A/B schweben also stets vor dem respektiven (sich bewegenden) Oberschenkel.

Dieser erste Betriebsmodus wird dabei so lange nicht verändert, solange der Aufrichtungswinkel α sich in einem vorbestimmten Winkelbereich bewegt. Dieser Winkelbereich ist in Fig. 5 mit +-α angegeben. Der erste Betriebsmodus wird außerdem solange nicht verlassen, solange die Anstellungswinkel β₁ bzw. β₂ der Leit-Stützstrukturen 106A/B ausreichend voneinander abweichen und zusätzlich gleichzeitig die Änderungsraten ω_{b1} bzw. ω_{b2} der Anstellungswinkel β₁ bzw. β₂ gegenläufige Vorzeichen aufweisen.

In anderen Worten erfasst die Regelungseinheit also, ob der Träger sich in einem als Gehen zu bezeichnenden Fortbewegungsmodus befindet und regelt die Aktuatoren 103A/B auf gleichbleibenden Abstand zu den Oberschenkeln.

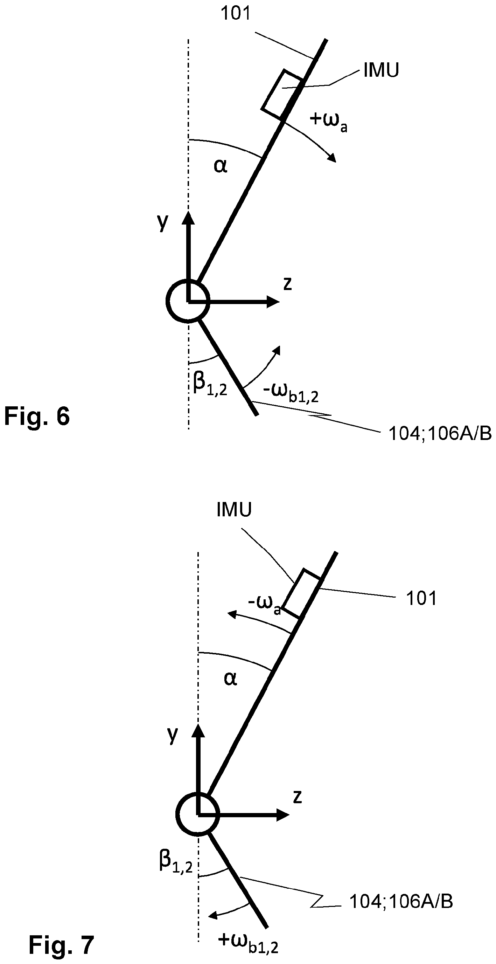

In Fig. 6 ist ein Zustand gezeigt, in welchem sich der Träger des Exoskeletts 100 angeschickt hat, einen Gegenstand auf- oder anzuheben, so dass der Aufrichtungswinkel α der Oberkörperanbindung 101 sich außerhalb des vorbestimmten Winkelbereichs +-α bewegt, und damit einen Wechsel des Betriebsmodus der Regelungseinheit von dem ersten Betriebsmodus in den zweiten Betriebsmodus bewirkt. In diesem Zustand sind auch die Anstellwinkel β₁ bzw. β₂ sowie die Änderungsraten ω_{b1} bzw. ω_{b2} der Anstellwinkel β₁ bzw. β₂ im Wesentlichen gleich bzw. gleichgerichtet. Hierüber kann die Regelungseinheit die Intention des Trägers, einen Gegenstand an- oder aufzuheben, verifizieren. Die Regelungseinheit wird daraufhin in den zweiten ,klassischen' Betriebsmodus wechseln, in welchem der Träger durch die Aktuatoren 103A/B aktiv unterstützt wird. Beim Übergang zwischen dem ersten in den zweiten Betriebsmodus sollte dabei zunächst der Abstand zwischen den Oberschenkelanbindungen 104A/B und den Oberschenkeln auf 0 reduziert, d.h. Kontakt hergestellt werden, bevor eine Krafteinleitung erfolgen kann, da der Träger andernfalls ruck- oder schlagartige Krafteinleitungen an den Oberschenkeln erfahren würde.

In Fig. 7 ist das Exoskelett 100 in einem Zustand gezeigt, in welchem sich der Träger aus einer Bück- oder Beugehaltung wieder aufrichtet. Dabei bewegt sich der der Aufrichtungswinkel α der Oberkörperanbindung 101 wieder in den vordefinierten Winkelbereich von hier kleiner 20°.

Zugleich bewegen sich beide Leitstützstrukturen 106A/B im Wesentlichen synchron in Richtung der Ausgangsstellung, wobei beide Anstellwinkel β₁ bzw. β₂, wobei beide Anstellungswinkel zeitgleich in einen Winkelbereich von betragsmäßig kleiner als 20° eintreten. Auch die Änderungsraten ω der Anstellwinkel β sind positiv. Da in diesem Fall die Anstellwinkel β₁ bzw. β₂ und der Aufrichtungswinkel α in den vorbestimmten Winkelbereich eintreten, wechselt die Regelungseinheit von dem zweiten in den ersten Betriebsmodus.

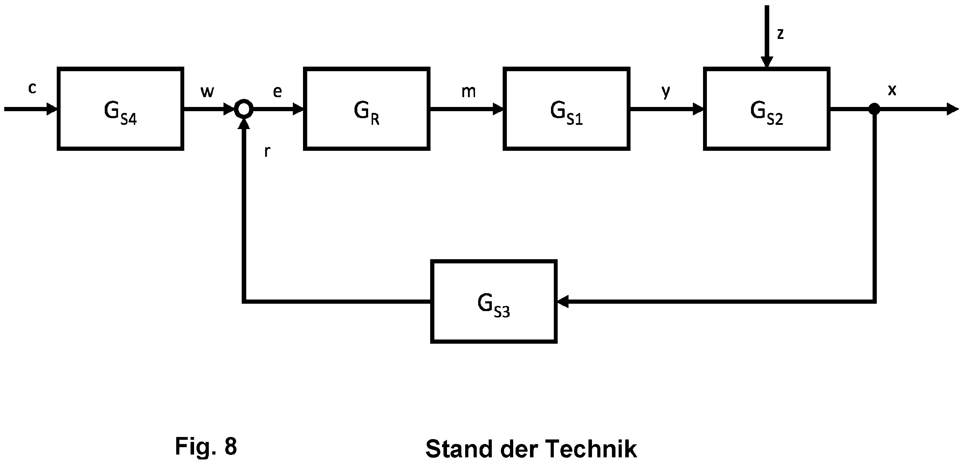

Zum besseren Verständnis der nachfolgend in Fig. 9 und 10 wiedergegebenen Regelkreise des ersten bzw. zweiten Betriebsmodus ist in Fig. 8 die Regelungsstruktur eines allgemeinen Regelungskreises wiedergegeben. Der Regelungskreis besteht dabei aus einem Sollwertsteller G_{S4}, der einen Sollwert c erhält und daraus eine Führungsgröße w ableitet. Die Führungsgröße wird dann mit einer Regelungsgröße r abgeglichen und ergibt eine Regeldifferenz e. Die Regeldifferenz e wird von einem Regler G_{R} zu einer Reglerausgangsgröße m verarbeitet, die wiederum als Eingangsgröße eines Stellglieds Gsi dient. Das Stellglied Gsi berechnet hieraus eine Stellgröße y, die in einer Regelstrecke G_{S2} eingebracht wird. Die Regelstrecke G_{S2} unterliegt dabei den Einflüssen einer Störgröße z. Dies ergibt am Ausgang der Regelstrecke G_{S2} eine Regelgröße x als Istwert, welche über einen Sensor G_{S3} erfasst und von dieser in den Regelkreis rückgeführt wird.

Alle Regelungsgrößen können dabei auch multidimensional z.B. als Vektor mit einer Vielzahl von einzelnen Einträgen aufgefasst werden.

Für den vorliegenden Fall kann ein erfindungsgemäßer Regelkreis entsprechend der Darstellungen der Fig. 9 für den ersten Betriebsmodus und der Fig. 10 für den zweiten Betriebsmodus eines Exoskeletts ausgestaltet sein, wobei eine Regelungseinheit (auch: Regler) abhängig von vorbeschriebenen Randbedingungen wie z.B. dem Eintritt oder Austritt des o.g. Aufrichtungswinkels in einen bestimmten Winkelbereich zwischen dem ersten Betriebsmodus (Fig. 9) und dem zweiten Betriebsmodus (Fig. 10) wechselt.

In den Fig. 9 und 10 wird dabei verkürzt nur der Regelkreis für eine (rechte) Seite eines Exoskeletts am Beispiel der Beinanbindung aus Fig. 3 dargestellt. Auf eine Unterteilung der Bezeichnung für linksseitig bzw. rechtsseitig am Exoskelett angeordnete Sensoren, z.B. S2A und S2B, bzw. den Sensoren zugeordneter Beinanbindungen mit Leit-Stützstrukturen und Aktuatoranbindungen (3,5,8A bzw. 3,5,8B) wurde verzichtet, ergibt sich jedoch im Lichte der vorgemachten Ausführungen.

Der Regelungskreis im ersten Betriebsmodus (Leerlauf), wie er in Fig. 9 dargestellt ist, hat die Aufgabe, einen gemessenen Abstand (Regelgröße x) zwischen der Oberschenkelanbindung 8 und dem Oberschenkel des Trägers zu regeln, wobei im dargestellten Fall ein Sollabstand c2 von z.B. 2mm in einem Speicher RAM des Reglers hinterlegt ist. Bei einer Abweichung von diesem Wert soll der Regler den Aktuator (das Stellglied Gsi der Regelstrecke) so ansteuern, dass der Wert erreicht wird. Der Regler nutzt hierzu als Messgrößen (Rückführungsgrößen) Messsignale r2 bis r5 von Sensoren S2 bis S5.

Bei den Sensoren S2 bis S5 handelt sich um folgende Sensoren: S2 entspricht der o.g. Inertialeinheit IMU (inertial measurement unit), welche den Aufrichtungswinkel α der Oberkörperanbindung 101 sowie die Änderungsrate des Aufrichtungswinkels (r2) misst. S3 stellt den Messwertgeber für die Winkelstellung des Aktuators 2, d.h. den Anstellungswinkel der Leitstützstruktur in Form der Winkellage des Augsgangsflansches 3 des Aktuators 2 dar (Winkel-Absolutwertgeber) dar (r3). S4 steht für den Abstandssensor 10 der Oberschenkelanbindungen 8 und misst den Abstand zwischen der Oberschenkelanbindung 8 und dem Oberschenkel des Trägers (r4). S5 steht für den für eine pulsweitenmodulierte Ansteuerung des Aktuators M notwendigen Hall-Sensors, welche die Winkelgeschwindigkeit eines bzw. des Rotors des Aktuators M misst (r5).

Der Regler weist einen hier mit CU1 bezeichneten Sollwerteinsteller auf, der die Messsignale zusammen mit Sollwertvorgaben zu einer Führungsgröße w0 verarbeitet. Bei der Führungsgröße w0 handelt es sich um das Delta zwischen dem über den Abstandssensor 10 gemessenen Abstand r4 und dem Sollabstand c4. Eine Reglerkontrolleinheit CU2 berechnet auf Basis der Führungsgröße w0 sowie der Messsignale r2 bis r5 eine geeignete Stelldifferenz e0 in Form einer Drehzahl- und Drehrichtungsvorgabe e0 für den Aktuator. Die Drehzahl- und Drehrichtungsvorgabe e0 wird von einer als MCU bezeichneten Motorkontrolleinheit dann in ein geeignetes Ansteuerungssignal m eines bzw. des mit dem Ausgangsflansch 3 verbundenen Aktuators M überführt. Dies führt zur Bewegung des Aktuators M und damit zugleich zur Bewegung der Leitstützstruktur 5 mit der Oberschenkelanbindung 8. Dies bewirkt eine Änderung der Winkellage y0 der Leitstützstruktur 5 und zugleich eine Änderung des (gemessenen) Abstands r4 des Abstandssensors 10 von dem Oberschenkel des Trägers. Die entsprechenden Änderungen der Messsignale der Sensoren S2 bis S5 werden als die Rückführungsgrößen r2 bis r5 in den Regelungskreis zurückgeführt, wobei diese auch durch die vom Träger des Exoskeletts eingebrachten Bewegungen (Störgröße z), insb. Vor- und Rückwärtsbewegungen der Oberschenkel, beeinflusst werden.

In dem Speicher RAM des Reglers sind ferner geeignete Bedingungen hinterlegt, bei welchen ein Wechsel des ersten in den zweiten Betriebsmodus erfolgen soll. Dies ist mit dem Wert c2 angedeutet, welcher einen zulässigen Winkelbereich für den Aufrichtungswinkel α der Oberkörperanbindung repräsentiert. Der Sollwertgeber CU2 überprüft das Vorliegen der Bedingungen und wechselt ggfs. den Betriebsmodus.

Im zweiten in Fig. 10 wiedergegebenen Betriebsmodus soll die Rückenmuskulatur des Trägers beim Bücken und Heben durch aktive Krafteinleitung in den Oberschenkel des Trägers entlastet werden. Der Regler regelt also keinen Abstand, sondern ein Drehmoment des Aktuators M. Für diesen Fall liegt die Oberschenkelanbindung 8 auf dem Oberschenkel des Trägers auf. Der Sollwerteinsteller CU2 wird in Abhängigkeit von im Speicher RAM hinterlegten Unterstützungseinstellungen (einstellbar über eine Nutzerschnittstelle UI) einen Drehmomenten-Referenzwert w1 berechnen, der von der Reglerkontrolleinheit CU1 in einen Drehmomenten-Differenzwert e1 (Regeldifferenz) umgesetzt wird. Auf Basis des Drehmomenten-Differenzwertes e1 berechnet die Motorkontrolleinheit IMU ein Ansteuerungssignal m für den Aktuator M, der dann über die Leitstützstruktur 5 bzw. Oberschenkelanbindung 8 eine Kraft y1 in den Oberschenkel des Trägers einleitet und dadurch die Aufrichtung des Trägers unterstützt.

Gleichzeitig wird über den Sollwerteinsteller CU2 überprüft, inwieweit Bedingungen für einen Wechsel in den ersten Betriebsmodus vorliegen oder nicht. Dies kann neben dem vordefinierten Winkelbereich des Aufrichtungswinkels z.B. auch eine asynchrone Bewegung der Leit-Stützstrukturen 5A/B sein, die über einen Vergleich der Anstellwinkel beider Leit-Stützstrukturen 5A/B gemessen werden kann. Hierdurch kann erkannt werden, wenn der Träger zu gehen beginnt und eine aktive Unterstützung nicht mehr erwünscht ist.

Im Gegensatz zum ersten Betriebsmodus ist im zweiten Betriebsmodus ein Drehmomentsensor S1 des Aktuators M, der das am Aktuator anliegende Drehmoment misst, notwendig.

Die vorbeschriebenen Ausführungsbeispiele wurden anhand der Regelung von Exoskeletten zur Unterstützung von Beuge- und Hebebewegungen geschildert, lassen sich aber natürlich auch auf vergleichbare Exoskelette zur Unterstützung anderer Körperpartien wie Hals, Unterschenkel, Ober- oder Unterarme und Finger (mit entsprechenden Anbindungen für diese Körperpartien) übertragen. Eine Beschränkung der Erfindungsidee durch die Ausführungsbeispiele ist naturgemäß nicht intendiert.

Die dargestellte Erfindung ermöglicht Exoskelette mit automatischer Umstellung zwischen einem Gehmodus mit einem hohen Tragekomfort für den Träger sowie einem Unterstützungsmodus mit Entlastung des Trägers.

### Bezugszeichenliste

- DGH: Drehgelenk Hüfte/Aktuator
- IMU: Intertialeinheit
- CU1: Sollwerteinsteller/Kontrolleinheit
- CU2: Regelkontrolleinheit
- MCU: Motorkontrolleinheit

- (α): Aufrichtungswinkel Oberkörper
- (β): Anstellungswinkel Leit-Stützstruktur (Extremtität)
- (ω): Änderungsrate eines Anstellungswinkels (β)

- 1: Hüftbügel / Hüftrahmen
- 2: Aktuator
- 3: Ausgangsflansch
- 4: Drehgelenk horizontal (Sagittalebene)
- 5: Leitstützstruktur (Beinglied/Gerüstarm)
- 6: Höhenverstellung
- 7: Kippgelenk
- 8: Oberschenkelanbindung (Oberschenkelplatte)
- 9: Oberschenkelauflage
- 10: Abstandssensor
- 11: Tasche
- 100: Exoskelett
- 101: Tragegeschirr
- 102: Hüftbügel
- 103: Aktuatoren
- 104: Oberschenkelanbindung mit Gurt
- 106: Gerüstarm/Leit-Stütz-Struktur (Oberschenkelanbindung)

- c: Sollwert
- w: Führungsgröße
- e: Regeldifferenz
- m: Reglerausgangsgröße
- y: Stellgröße
- z: Störgröße
- x: Regelgröße (Istwert)
- r: Rückführungsgröße

- G_{R}: Regler
- G_{S1}: Stellglied
- G_{S2}: Strecke
- G_{S3}: Sensor
- G_{S4}: Sollwert-Einsteller

- S1: Drehmomentsensor (Aktuator)
- S2: IMU - Beschleunigungssensor + Gyroskop (Oberkörper)
- S3: Winkel-Absolutwert-geber (Aktuator)
- S4: Näherungs-sensor (Oberschenkelanbindung)
- S5: Hall-Sensoren (Aktuator)

- m: PWM-Signal
- M: Aktuator (Elektro-Motor)
- z: Bewegung des Nutzers (Störgröße)
- e0: Drehzahl und -richtung [±1/min]
- e1: Differenzwert [Nm]

- r1: Drehmoment [Nm]
- r2: Winkel + Winkelgeschwindigkeit Struktur/ Oberkörper [rad, rad/s]
- r3: Winkel Beinanbindung [°]
- r4: Abstand zwischen Beinanbindung und Nutzer [mm
- r5: Winkelgeschwindig-keit Motor/Antrieb

- y0: Winkeländerung [°] Anstellwinkel
- y1: Krafteinleitung in Oberschenkel

- w0: Differenz zum Sollabstand [±mm]
- w1: Drehmoment-Referenzwert [Nm]

- UI: User Interface / Nutzereingaben

## Patentansprüche

1. Exoskelett (100) mit einer Oberkörperanbindung (101), einem mit der Oberkörperanbindung (101) fest verbundenen Hüftrahmen (102), einem ersten bzw. zweiten jeweils an dem Hüftrahmen (102) befestigten Aktuator (103A/B) zur Unterstützung einer Geh- oder Beugebewegung eines Trägers, einer ersten und einer zweiten jeweils einem Aktuator (103A/B) zugeordneten Oberschenkelanbindung (8A/B;104A/B) und einer ersten und einer zweiten Leit-Stützstruktur (3;5; 106A/B) zur Übertragung der Kräfte zwischen jeweils einer Oberschenkelanbindung (8A/B; 104A/B) und dem dieser Oberschenkelanbindung (8A/B;104A/B) zugeordnetem Aktuator (103A/B) sowie einer Regelungseinheit zur Ansteuerung der Aktuatoren (103A/B), **dadurch gekennzeichnet, dass** in jeder Oberschenkelanbindung (8A/B;104A/B) ein Abstandssensor (10) zur kontaktlosen Nachverfolgung der Position eines Oberschenkels des Trägers relativ zu der Oberschenkelanbindung (8A/B; 104A/B) angeordnet ist.

2. Exoskelett nach Anspruch 1, **dadurch gekennzeichnet, dass** jeder Abstandssensor (10) ein kapazitiver, ein optischer oder ein Ultraschall-Abstandssensor ist.

3. Exoskelett (100) nach Anspruch 1 oder 2, **dadurch gekennzeichnet, dass** jeder Abstandssensor (10) in einer Tasche (11) der Oberschenkelanbindung (8; 104) angeordnet ist, wodurch auch bei Anlage der Oberschenkelanbindung (8; 104) an dem entsprechenden Oberschenkel ein definierter Abstand zwischen dem Abstandssensor (10) und dem Oberschenkel gegeben ist.

4. Exoskelett (100) nach einem der vorstehenden Ansprüche, **dadurch gekennzeichnet, dass** die Regelungseinheit die Aktuatoren (103) in einem ersten Betriebsmodus ohne Unterstützung einer Gehbewegung derart ansteuerbar ist, dass jede Oberschenkelanbindung (8; 104) sich jeweils in einem vordefinierten Abstand ungleich 0 zu dem ihr zugeordneten Oberschenkel befindet.

5. Exoskelett (100) nach Anspruch 4, **dadurch gekennzeichnet, dass** die Regelungseinheit eingerichtet ist, die Aktuatoren (103) in einem zweiten Betriebsmodus zur Unterstützung einer Beugebewegung derart anzusteuern, dass jede Oberschenkelanbindung (8; 104) zur Krafteinleitung jeweils berührend auf dem ihr zugeordneten Oberschenkel aufliegt.

6. Exoskelett (100) nach Anspruch 5, **dadurch gekennzeichnet, dass** das Exoskelett (100) eine Inertialeinheit (IMU) zur Erfassung eines Ausrichtungswinkels (α) der Oberkörperanbindung (101) gegenüber der Vertikalen aufweist, wobei die Regelungseinheit eingerichtet ist, in dem ersten Betriebsmodus zu bleiben bzw. vom zweiten in den ersten Betriebsmodus zu wechseln, wenn der Ausrichtungswinkel (α) der Oberkörperanbindung (101) sich innerhalb eines vorbestimmten Winkelbereichs bewegt, insbesondere in einem Winkelbereich von ±20° gegenüber der Vertikalen.

7. Exoskelett (100) nach Anspruch 6, **dadurch gekennzeichnet, dass** die Regelungseinheit eingerichtet ist, in dem zweiten Betriebsmodus zu bleiben bzw. vom ersten in den zweiten Betriebsmodus zu wechseln, wenn der Ausrichtungswinkel (α) der Oberkörperanbindung (101) sich außerhalb des vordefinierten Winkelbereichs bewegt.

8. Exoskelett (100) nach Anspruch 5 oder 6, **dadurch gekennzeichnet, dass** das Exoskelett zwei Winkelsensoren zur Erfassung der Anstellwinkel (β₁, β₂) (in der Sagittalebene) zwischen der Oberkörperanbindung (101) und jeder der Leit-Stützstrukturen (3,5; 106) umfasst, wobei die Regelungseinheit eingerichtet ist, vom ersten in den zweiten Betriebsmodus zu wechseln, wenn beide Anstellwinkel (β₁, β₂) der Leit-Stütz-Strukturen (3,5; 106) im Wesentlichen synchron in einen vordefinierten Winkelbereich eintreten , insb. einem Winkelbereich von kleiner -45° und/oder
wobei die Regelungseinheit eingerichtet ist, vom zweiten in den ersten Betriebsmodus zu wechseln, wenn beide Anstellwinkel β₁, β₂ der Leit-Stütz-Strukturen (3,5; 106) im Wesentlichen synchron aus dem vordefinierten Winkelbereich austreten, insb. einem Winkelbereich kleiner als -20°.

9. Exoskelett (100) nach einem der Ansprüche 6 bis 8, **dadurch gekennzeichnet, dass** die Inertialeinheit (IMU) einen Beschleunigungssensor zur Erfassung der Beschleunigungswerte der Oberkörperanbindung (101), und das Exoskelett (100) weiterhin einen ersten bzw. zweiten Winkelgeschwindigkeit-Sensor zur Erfassung der Winkelgeschwindigkeit des ersten bzw. zweiten Aktuators (103A/B) sowie einen ersten und einen zweiten Drehmomentsensor zur Erfassung der an erstem bzw. zweitem Aktuator anliegenden Momente umfasst.

10. Exoskelett (100) nach einem der vorstehenden Ansprüche 5 bis 9, **dadurch gekennzeichnet, dass** die Regelungseinheit eingerichtet ist vom ersten in den zweiten Betriebsmodus zu wechseln, wenn einer der Drehmomentsensoren ein Drehmoment ungleich 0 misst.

11. Verfahren zur Ansteuerung eines Aktuators (103) einer Leit-Stütz-Struktur (3,5; 106) eines Exoskeletts (100) über eine Regelungseinheit , wobei die Leit-Stütz-Struktur (3;5) eine Anbindung (8; 104) zur Unterstützung einer Extremität eines Trägers aufweist, **dadurch gekennzeichnet, dass** in der Anbindung (8; 104) ein Abstandssensor (10) zur Messung des Abstandes zwischen der Anbindung (8; 104) und der Extremität angeordnet ist, wobei die Regelungseinheit den Aktuator (103) in einem ersten Betriebsmodus so ansteuert, dass die Anbindung (8; 104) von der Extremität in einem vordefinierten Abstand gehalten wird und in einem zweiten Betriebsmodus so ansteuert, dass die Anbindung (8; 104) an der Extremität kraftleitend anliegt, wobei der Wechsel zwischen den Betriebsmodi in Abhängigkeit mindestens einer Variablen der nachfolgenden Gruppe erfolgt:
- Einem Aufrichtungswinkel (α) des Oberkörpers des Trägers
- Änderungsrate des Aufrichtungswinkels (α)
- Anstellwinkel (β) der oder einer Extremität
- Änderungsrate (ω) eines Anstellungswinkels (β) der oder einer Extremität
- Vergleich der Anstellungswinkel (ßi) der Extremität mit einem zweiten Anstellungswinkel (β₂) einer zweiten Extremität des Trägers
- Anliegendes Drehmoment in bzw. an dem Aktuator (103).

## Claims

1. Exoskeleton (100) having an upper body connection structure (101), a hip frame (102) fixedly connected to the upper body connection structure (101), a first and a second actuator (103A/B) respectively (102) attached to the hip frame (102) for supporting a walking or bending movement of a wearer, a first and a second thigh attachment structure (8A/B; 104A/B) each associated with an actuator (103A/B), and a first and a second guide support structure (3; 5; 106A/B) for transmitting the forces between a respective thigh attachment structure (8A/B; 104A/B) and the actuator (103A/B) associated with this thigh attachment structure (8A/B; 104A/B) as well as a control unit for controlling the actuators (103A/B), **characterized in that** a distance sensor (10) for contactless tracking of the position of a thigh of the wearer relative to the thigh attachment structure (8A/B; 104A/B) is arranged in each thigh attachment structure (8A/B; 104A/B).

2. Exoskeleton according to claim 1, **characterized in that** each distance sensor (10) is a capacitive, an optical or an ultrasonic distance sensor.

3. Exoskeleton (100) according to claim 1 or 2, **characterized in that** each distance sensor (10) is arranged in a compartment (11) of the thigh attachment structure (8; 104), whereby a defined distance between the distance sensor (10) and the thigh is also given when the thigh attachment structure (8; 104) is in contact with the corresponding thigh.

4. Exoskeleton (100) according to one of the preceding claims, **characterized in that** the control unit can control the actuators (103) in a first operating mode without supporting a walking movement in such a way that each thigh attachment structure (8; 104) is located at a predefined distance unequal to 0 from the thigh assigned to it.

5. Exoskeleton (100) according to claim 4, **characterized in that** the control unit is set up to control the actuators (103) in a second operating mode to support a bending movement in such a way that each thigh attachment structure (8; 104) rests in contact on the thigh assigned to it for the purpose of force transmission.

6. Exoskeleton (100) according to claim 5, **characterized in that** the exoskeleton (100) has an inertial unit (IMU) for detecting an alignment angle (α) of the upper body connection structure (101) with respect to the vertical, the control unit being set up to remain in the first operating mode or to switch from the second to the first operating mode if the alignment angle (α) of the upper body connection structure (101) ranges in between a predetermined angular range, in particular within an angular range of ±20° with respect to the vertical.

7. Exoskeleton (100) according to claim 6, **characterized in that** the control unit is set up to remain in the second operating mode or to switch from the first to the second operating mode if the alignment angle (α) of the upper body connection structure (101) is outside the predefined angle range.

8. Exoskeleton (100) according to claim 5 or 6, **characterized in that** the exoskeleton comprises two angle sensors for detecting the inclination angles (β₁, β₂) (in the sagittal plane) between the upper body connection structure (101) and each of the guide support structures (3, 5; 106), wherein the control unit is set up to switch from the first to the second operating mode when both inclination angles (β₁, β₂) of the guide support structures (3, 5; 106) enter a predefined angular range substantially synchronously, in particular an angular range of less than -45° and/or
wherein the control unit is set up to switch from the second to the first operating mode when both inclination angles β₁, β₂ of the guide support structures (3, 5; 106) exit the predefined angular range substantially synchronously, in particular an angular range of less than -20°.

9. Exoskeleton (100) according to one of claims 6 to 8, **characterized in that** the inertial unit (IMU) comprises an acceleration sensor for detecting the acceleration values of the upper body connection structure (101), and the exoskeleton (100) further comprises a first and a second angular velocity sensor for detecting the angular velocity of the first and second actuator (103A/B), respectively, and a first and a second torque sensor for detecting the torques applied to the first and second actuator, respectively.

10. Exoskeleton (100) according to one of the preceding claims 5 to 9, **characterized in that** the control unit is set up to switch from the first to the second operating mode if one of the torque sensors measures a torque unequal to 0.

11. Method for controlling an actuator (103) of a guide support structure (3, 5; 106) of an exoskeleton (100) via a control unit, the guide support structure (3; 5) having an attachment structure (8; 104) for supporting an extremity of a wearer, **characterized in that** a distance sensor (10) for measuring the distance between the attachment structure (8; 104) and the extremity is arranged in the attachment structure (8; 104), the control unit controlling the actuator (103) in a first operating mode in such a way that the attachment structure (8; 104) is held at a predefined distance from the extremity and in a second operating mode in such a way that the attachment structure (8; 104) bears against the extremity in a force-conducting manner, the change between the operating modes taking place as a function of at least one variable of the following group:
- an alignment angle (α) of the wearer's upper body
- rate of change of the alignment angle (α)
- inclination angle (β) of the extremity or an extremity
- rate of change (ω) of an inclination angle (β) of the or an extremity
- comparison of the inclination angle (β₁) of the extremity with a second inclination angle (β₂) of a second extremity of the wearer
- applied torque in or on the actuator (103).

## Revendications

1. Exosquelette (100) avec un raccordement de torse (101), un châssis de hanche (102) relié fixement au raccordement de torse (101), un premier ou deuxième actionneur (103A/B) fixé respectivement au châssis de hanche (102) pour le soutien d'un mouvement de marche ou de flexion d'un porteur, un premier et un deuxième raccordement de cuisse (8A/B ; 104A/B) associé respectivement à un actionneur (103A/B) et une première et une deuxième structure de guidage-support (3 ; 5 ; 106A/B) pour la transmission des forces entre respectivement un raccordement de cuisse (8A/B ; 104A/B) et l'actionneur (103A/B) associé à ce raccordement de cuisse (8A/B ; 104A/B) ainsi qu'une unité de régulation pour la commande des actionneurs (103A/B), **caractérisé en ce qu'**un capteur de distance (10) pour le suivi sans contact de la position d'une cuisse du porteur par rapport au raccordement de cuisse (8A/B ; 104A/B) est disposé dans chaque raccordement de cuisse (8A/B ; 104A/B).

2. Exosquelette selon la revendication 1, **caractérisé en ce que** chaque capteur de distance (10) est un capteur de distance capacitif, un capteur de distance optique ou un capteur de distance ultrasonore.

3. Exosquelette (100) selon la revendication 1 ou 2, **caractérisé en ce que** chaque capteur de distance (10) est disposé dans une poche (11) du raccordement de cuisse (8 ; 104), ce qui a pour effet qu'une distance définie entre le capteur de distance (10) et la cuisse est présente y compris lorsque le raccordement de cuisse (8 ; 104) s'applique sur la cuisse correspondante.

4. Exosquelette (100) selon l'une quelconque des revendications précédentes, **caractérisé en ce que** l'unité de régulation peut être commandée les actionneurs (103) dans un premier mode de fonctionnement sans soutien d'un mouvement de marche, de telle sorte que chaque raccordement de cuisse (8 ; 104) se trouve respectivement à une distance prédéfinie différente de 0 par rapport à la cuisse associée à celui-ci.

5. Exosquelette (100) selon la revendication 4, **caractérisé en ce que** l'unité de régulation est conçue pour commander les actionneurs (103) dans un deuxième mode de fonctionnement pour le soutien d'un mouvement de flexion, de telle sorte que chaque raccordement de cuisse (8 ; 104) repose respectivement avec contact sur la cuisse associée à celui-ci pour l'application d'une force.

6. Exosquelette (100) selon la revendication 5, **caractérisé en ce que** l'exosquelette (100) présente une unité inertielle (IMU) pour l'acquisition d'un angle d'orientation (α) du raccordement de torse (101) par rapport à la verticale, dans lequel l'unité de régulation est conçue pour rester dans le premier mode de fonctionnement ou pour passer du deuxième dans le premier mode de fonctionnement, lorsque l'angle d'orientation (α) du raccordement de torse (101) se déplace à l'intérieur d'une plage angulaire prédéterminée, en particulier dans une plage angulaire de ±20° par rapport à la verticale.

7. Exosquelette (100) selon la revendication 6, **caractérisé en ce que** l'unité de régulation est conçue pour rester dans le deuxième mode de fonctionnement ou pour passer du premier dans le deuxième mode de fonctionnement, lorsque l'angle d'orientation (α) du raccordement de torse (101) se déplace à l'extérieur de la plage angulaire prédéfinie.

8. Exosquelette (100) selon la revendication 5 ou 6, **caractérisé en ce que** l'exosquelette comprend deux capteurs d'angle pour l'acquisition des angles d'attaque (β₁, β₂) (dans le plan sagittal) entre le raccordement de torse (101) et chacune des structures de guidage-support (3, 5 ; 106), dans lequel l'unité de régulation est conçue pour passer du premier dans le deuxième mode de fonctionnement, lorsque les deux angles d'attaque (β₁, β₂) des structures de guidage-support (3, 5 ; 106) entrent de manière sensiblement synchrone dans une plage angulaire prédéfinie, en particulier une plage angulaire inférieure à -45° et/ou
dans lequel l'unité de régulation est conçue pour passer du deuxième dans le premier mode de fonctionnement, lorsque les deux angles d'attaque β₁, β₂ des structures de guidage-support (3, 5 ; 106) sortent de manière sensiblement synchrone de la plage angulaire prédéfinie, en particulier une plage angulaire inférieure à -20°.

9. Exosquelette (100) selon l'une quelconque des revendications 6 à 8, **caractérisé en ce que** l'unité inertielle (IMU) comprend un capteur d'accélération pour l'acquisition des valeurs d'accélération du raccordement de torse (101), et l'exosquelette (100) en outre un premier ou deuxième capteur de vitesse angulaire pour l'acquisition de la vitesse angulaire du premier ou deuxième actionneur (103A/B) ainsi qu'un premier et un deuxième capteur de couple pour l'acquisition des couples s'appliquant sur le premier ou deuxième actionneur.

10. Exosquelette (100) selon l'une quelconque des revendications précédentes 5 à 9, **caractérisé en ce que** l'unité de régulation est conçue pour passer du premier dans le deuxième mode de fonctionnement, lorsqu'un des capteurs de couple mesure un couple différent de 0.

11. Procédé pour la commande d'un actionneur (103) d'une structure de guidage-support (3, 5 ; 106) d'un exosquelette (100) par l'intermédiaire d'une unité de régulation, dans lequel la structure de guidage-support (3 ; 5) présente un raccordement (8 ; 104) pour le soutien d'une extrémité d'un porteur, **caractérisé en ce qu'**un capteur de distance (10) pour la mesure de la distance entre le raccordement (8 ; 104) et l'extrémité est disposé dans le raccordement (8 ; 104), dans lequel l'unité de régulation commande l'actionneur (103) dans un premier mode de fonctionnement, de sorte que le raccordement (8 ; 104) est maintenu à une distance prédéfinie de l'extrémité et dans un deuxième mode de fonctionnement le commande de sorte que le raccordement (8 ; 104) s'applique sur l'extrémité de manière à appliquer une force, dans lequel le passage entre les modes de fonctionnement s'effectue en fonction d'au moins une variable du groupe suivant :
- un angle de redressement (α) du torse du porteur
- taux de variation de l'angle de redressement (α)
- angle d'attaque (β) de la ou d'une extrémité
- taux de variation (ω) d'un angle d'attaque (β) de la ou d'une extrémité
- comparaison des angles d'attaque (β₁) de l'extrémité à un deuxième angle d'attaque (β₂) d'une deuxième extrémité du porteur
- application d'un couple dans ou sur l'actionneur (103).
